# EUROPÄISCHE PATENTANMELDUNG

(11) **EP 3 770 131 A1**
(43) Veröffentlichungstag der Anmeldung: **27.01.2021**
(21) Anmeldenummer: 20187564.8
(22) Anmeldetag: 24.07.2020
(51) Int. Cl.: C03C 17/02, C03C 23/00, G02B 3/00, C03B 19/14

(54) **VERFAHREN UND SYSTEM ZUM HERSTELLEN EINER DREIDIMENSIONALEN STRUKTUR AUF EINEM SUBSTRAT**

(30) Priorität: 26.07.2019 DE 102019120346; 29.10.2019 DE 102019129111
(71) Anmelder: Deutsches Zentrum für Luft- und Raumfahrt e.V., 51147 Köln (DE)
(72) Erfinder: Riede, Wolfgang, 75417 Mühlacker (DE); Schröder, Helmut, 70569 Stuttgart (DE); Allenspacher, Paul, 73265 Dettingen/Teck (DE); Bartels, Nils, 70563 Stuttgart (DE)
(74) Vertreter: Hoeger, Stellrecht & Partner Patentanwälte mbB

(57) **Zusammenfassung**

Um ein Verfahren zum Herstellen einer dreidimensionalen Struktur auf einem Substrat, insbesondere zur Ausbildung eines optischen Bauelements, welche dreidimensionale Struktur aus Siliziumdioxid oder im Wesentlichen aus Siliziumdioxid ausgebildet ist, wobei die dreidimensionale Struktur generativ ausgebildet wird, so zu verbessern, dass die dreidimensionale Struktur auf dem Substrat auf einfache Weise ausgebildet werden kann, wird vorgeschlagen, dass das Substrat in einer Sauerstoff enthaltenden Atmosphäre mit einem Silizium enthaltenden Precursor in Kontakt gebracht und mit ein Strahlungsfeld definierender monochromatischer elektromagnetischer Strahlung mit einer Wellenlänge im ultravioletten Spektralbereich beaufschlagt wird.

Ferner wird ein verbessertes System zum Herstellen einer dreidimensionalen Struktur auf einem Substrat vorgeschlagen.

## Beschreibung

Die vorliegende Erfindung betrifft ein Verfahren zum Herstellen einer dreidimensionalen Struktur auf einem Substrat, insbesondere zur Ausbildung eines optischen Bauelements, welche dreidimensionale Struktur aus Siliziumdioxid oder im Wesentlichen aus Siliziumdioxid ausgebildet wird.

Ferner betrifft die vorliegende Erfindung ein System zum Herstellen einer dreidimensionalen Struktur auf einem Substrat, insbesondere zur Ausbildung eines optischen Bauelements, welche dreidimensionale Struktur aus Siliziumdioxid oder im Wesentlichen aus Siliziumdioxid ausgebildet wird.

Es sind verschiedene Verfahren der eingangs beschriebenen Art bekannt zum Herstellen dreidimensionaler Mikro- und Nanostrukturen. Beispielsweise können mit diesen Mikrolinsen auf optischen Oberflächen hergestellt werden.

Die am weitesten verbreitete Methode zur Herstellung von Mikrolinsen wird als sogenanntes "Resist Melting" bezeichnet. Bei diesem Verfahren wird ein Glassubstrat zunächst mit einem Fotolack oder einem anderen Polymer beschichtet. Diese Schicht wird dann anschließend fotolithographisch selektiv ausgehärtet. Hierbei kommen üblicherweise Fotomasken zum Einsatz. Der nicht ausgehärtete Fotolack wird mit einem Lösemittel entfernt. Zurück bleiben beispielsweise zylinderförmige Strukturen aus ausgehärtetem Fotolack. Diese werden auf Temperaturen oberhalb der Glastemperatur des Fotolacks erhitzt und nehmen dabei eine Linsenform an, und zwar aufgrund der Minimierung der Oberflächenspannung.

Mikrolinsen aus einem Fotolack haben jedoch nur eine begrenzte thermische und mechanische Stabilität. Zudem weisen sie eine hohe Absorption, insbesondere im sichtbaren Spektralbereich und im ultravioletten Spektralbereich, auf. Daher wäre es für viele Anwendungen vorteilhaft, wenn das gewünschte Oberflächenprofil, also die Mikro- beziehungsweise Nanostruktur, direkt auf das Substrat, beispielsweise ein Quarzglas, übertragen werden könnte. Eine Möglichkeit hierfür stellt das Ionenätzen dar, auch als "Reactive Ion Etching" (RIE) bezeichnet.

Ein Nachteil des Ionenätzens ist es jedoch, dass insbesondere keine erhabenen Strukturen auf einer Oberfläche des Substrats ausgebildet werden können.

Es ist daher eine Aufgabe der vorliegenden Erfindung, ein Verfahren und ein System der eingangs beschriebenen Art so zu verbessern, dass dreidimensionale Strukturen auf einem Substrat auf einfache Weise ausgebildet werden können.

Diese Aufgabe wird bei einem Verfahren der eingangs beschriebenen Art erfindungsgemäß dadurch gelöst, dass die dreidimensionale Struktur generativ ausgebildet wird, dass das Substrat in einer Sauerstoff enthaltenden Atmosphäre mit einem Silizium enthaltenden Precursor in Kontakt gebracht und mit einem Strahlungsfeld definierender monochromatischer elektromagnetischer Strahlung mit einer Wellenlänge im ultravioletten Spektralbereich beaufschlagt wird.

Die vorgeschlagene Weiterbildung des bekannten Verfahrens ermöglicht es insbesondere, Freiformoptiken präzise herzustellen, und zwar durch ein generatives Herstellungsverfahren. Zudem ist es möglich, dreidimensionale Strukturen auf dem Substrat auszubilden, und zwar aus Siliziumdioxid. Beim Ionenätzen von Quarzglas wird zwar ebenfalls eine dreidimensionale Struktur aus reinem Siliziumdioxid ausgebildet, doch ist dies nicht additiv möglich. Zudem ermöglicht es das vorgeschlagene Verfahren, die dreidimensionale Struktur in definierter Weise auszubilden, insbesondere durch Einstellung von Verfahrensparametern. Beispielsweise können so Linsen mit freier Formgebung, zum Beispiel für kleine Mikroskope im ultravioletten Spektralbereich oder zur Ein- und Auskopplung von Licht in optische Fasern erzeugt werden.

Günstig ist es, wenn der Precursor dem Substrat aus der Gasphase zugeführt wird. Dies ermöglicht es insbesondere, eine Tröpfchenbildung auf dem Substrat zu vermeiden. Die dreidimensionale Struktur kann auf dem Substrat so in gewünschter und definierter Weise ausgebildet werden.

Vorteilhaft ist es, wenn als Precursor Silikon-Öl oder Tetraethylorthosilicat eingesetzt wird. In sauerstoffhaltiger Atmosphäre unter Zufuhr von Energie, die über das Strahlungsfeld eingebracht wird, kann so auf der Oberfläche des Substrats eine Umwandlung des Precursors zu Siliziumdioxid (SiO₂) in definierter Weise erreicht werden.

Um eine möglichst gleichmäßige Atmosphäre mit dem Precursor zu erhalten, ist es günstig, wenn der Precursor auf eine Temperatur in einem Bereich von etwa 20°C bis etwa 100°C erwärmt wird. So kann der Precursor leichter in die Gasphase übergehen.

Vorteilhafterweise wird der Precursor mit einer Viskosität in einem Bereich von etwa 1 cSt bis etwa 200 cSt eingesetzt. Insbesondere kann der Precursor mit einer Viskosität in einem Bereich von etwa 5 cSt bis etwa 100 cSt, eingesetzt werden. Einen Precursor mit einer Viskosität in den angegebenen Bereichen einzusetzen hat den Vorteil, dass dieser auf einfache Weise bei relativ niedrigen Temperaturen in die Gasphase übergeführt werden kann.

Vorzugsweise wird eine Form der dreidimensionalen Struktur durch ein Strahlprofil des Strahlungsfeldes vorgegeben. Diese Vorgehensweise ermöglicht es insbesondere, dreidimensionale Strukturen ohne Masken oder dergleichen zu realisieren. Die das Strahlungsfeld definierende monochromatische elektromagnetische Strahlung dient somit nicht nur dazu, die für die Umsetzung des Precursors zu Siliziumdioxid erforderliche Energie bereitzustellen, sondern auch dazu, durch das Strahlprofil des Strahlungsfeldes die Form der dreidimensionalen Struktur vorzugeben.

Vorteilhaft ist es, wenn das Strahlungsfeld mit einer optischen Abbildungsvorrichtung auf das Substrat abgebildet wird. Insbesondere kann die Abbildungsvorrichtung mindestens eine Linse und/oder mindestens einen Spiegel umfassen. Mit einer derartigen Abbildungsvorrichtung kann das Strahlungsfeld in gewünschter und definierter Weise auf das Substrat gerichtet werden.

Um eine möglichst hohe Energiedichte auf dem Substrat zu erreichen, ist es vorteilhaft, wenn das Substrat mit dem Strahlungsfeld quer, insbesondere senkrecht, zu einer Oberfläche des Substrats beaufschlagt wird.

Die Umsetzung des Precursors zu Siliziumdioxid kann insbesondere dadurch verbessert werden, wenn das Substrat auf eine Substrattemperatur in einem Bereich von etwa 20°C bis etwa 80°C erwärmt wird. Insbesondere kann das Substrat auf eine Substrattemperatur in einem Bereich von etwa 40°C bis etwa 50°C erwärmt werden.

Vorteilhaft ist es, wenn als Substrat Quarzglas (SiO₂), insbesondere unbeschichtetes Quarzglas, oder Calciumfluorid (CaF₂) eingesetzt wird. Derartige Substrate sind insbesondere für ultraviolette Strahlung durchlässig. Bei einem Substrat aus Quarzglas kann somit insgesamt ein optisches Element umfassend das Substrat und die dreidimensionale Struktur aus einem einheitlichen Material durch ein rein generatives Herstellungsverfahren ausgebildet werden.

Vorzugsweise wird das Verfahren in einer Atmosphäre mit einem Sauerstoffanteil in einem Bereich von etwa 15% bis 100% durchgeführt. Insbesondere ist es günstig, wenn der Sauerstoffanteil etwa 20% beträgt. Eine Atmosphäre mit einem Sauerstoffanteil im angegebenen Bereich ermöglicht eine gute Umsetzung des Precursors zu Siliziumdioxid auf der Oberfläche des Substrats.

Gemäß einer weiteren bevorzugten Ausführungsform der Erfindung kann vorgesehen sein, dass die Sauerstoff enthaltende Atmosphäre unter einem Druck in einem Bereich von etwa 1 mbar bis etwa 10 bar gehalten wird. Insbesondere wird die Sauerstoff enthaltende Atmosphäre unter einem Druck in einem Bereich von etwa 10 mbar bis etwa 1 bar gehalten. Unter diesen Druckbedingungen kann die Umsetzung des Precursors zu Siliziumdioxid in gewünschter Weise erreicht werden.

Für die Ausbildung dreidimensionaler Strukturen aus Siliziumdioxid ist es vorteilhaft, wenn das Substrat kontinuierlich oder gepulst mit dem Strahlungsfeld beaufschlagt wird. Eine gepulste Beaufschlagung hat insbesondere den Vorteil, dass sehr hohe Strahlungsintensitäten erreicht werden können. Dies gilt insbesondere für die Umsetzung des Precursors zu Siliziumdioxid an der Oberfläche des Substrats.

Für eine gute Umsetzung des Precursors ist es günstig, wenn das Substrat gepulst mit einer Pulsdauer in einem Bereich von etwa 1 ns bis etwa 20 ns mit dem Strahlungsfeld beaufschlagt wird. Insbesondere kann die Beaufschlagung gepulst mit einer Pulsdauer in einem Bereich von etwa 5 ns bis etwa 10 ns erfolgen. Eine solche Vorgehensweise ermöglicht es insbesondere, leistungsstarke Pulslaser einzusetzen.

Vorzugsweise wird das Substrat gepulst mit einer Repetitionsrate in einem Bereich von etwa 0,1 kHz bis etwa 1000 kHz beaufschlagt. Insbesondere kann die Repetitionsrate etwa 1 kHz betragen. Beispielsweise können so auch Relativbewegungen zwischen dem Substrat und dem Strahlungsfeld, beispielsweise durch Bewegen des Substrats, zwischen den Pulsen vorgenommen werden, um zum Beispiel auch größere Strukturen, beispielsweise Linsen mit einer anpassbaren Form, generativ auszubilden.

Gemäß einer weiteren bevorzugten Ausführungsform der Erfindung kann vorgesehen sein, dass das Substrat gepulst mit einem Strahlungsfeld mit einer Pulsenergiedichte in einem Bereich von etwa 0,1 J/cm² bis etwa 20 J/cm² beaufschlagt wird. Insbesondere kann die Pulsenergiedichte in einem Bereich von etwa 0,2 J/cm² bis etwa 10 J/cm² liegen.

Ferner ist es günstig, wenn das Substrat während einer Bestrahlungszeit in einem Bereich von etwa 1 Minute bis etwa 50 Stunden mit dem Strahlungsfeld beaufschlagt wird. Beispielsweise kann es in einem Bereich von etwa 10 Minuten bis etwa 500 Minuten mit dem Strahlungsfeld beaufschlagt werden. Die Bestrahlungszeit wird vorzugsweise unter Berücksichtigung weiterer Verfahrensparameter so gewählt, dass die gewünschte dreidimensionale Struktur in der vorgegebenen Form ausgebildet werden kann.

Auf einfache Weise lässt sich das Verfahren durchführen, wenn die monochromatische Strahlung mit einem Laser erzeugt wird. Insbesondere kann es sich dabei um einen Nd:YAG-Laser handeln. Mit einem solchen Nd:YAG-Laser kann ein Strahlungsfeld mit einer Wellenlänge von 355 nm gepulst mit Pulsdauern von 10 ns und einer Pulsenergie von 1 mJ fokussiert auf eine Fläche von 190 x 180 µm² erreicht werden. Zudem lassen sich mit einem solchen Laser auf einfache Weise Repetitionsraten von 1 kHz realisieren.

Günstig ist es, wenn die monochromatische Strahlung mit einer Wellenlänge in einem Bereich von etwa 100 nm bis etwa 400 nm eingesetzt wird. Insbesondere kann sie etwa 355 nm betragen. Strahlung mit einer Wellenlänge in den angegebenen Bereichen ermöglicht eine gute Umsetzung des Precursors zu Siliziumdioxid.

Um überschüssige Energie, die durch das Strahlungsfeld bereitgestellt wird, auf einfache Weise abführen zu können, ist es vorteilhaft, wenn das Substrat mit dem Strahlungsfeld durchstrahlt wird.

Günstigerweise wird das Strahlungsfeld nach dem Durchstrahlen des Substrats absorbiert. Beispielsweise kann dies mittels einer Strahlfalle erreicht werden, die in Strahlungsrichtung des Strahlungsfeldes hinter dem Substrat angeordnet wird.

Vorteilhaft ist es, wenn das Substrat in einer Substratkammer angeordnet wird, in welcher die Sauerstoff enthaltende Atmosphäre herrscht. So ist es möglich, definierte Bedingungen für die Durchführung des Verfahrens vorzugeben. Beispielsweise kann so ein Sauerstoffgehalt in der das Substrat umgebenden Atmosphäre vorgegeben werden, ebenso wie der darin herrschende Druck.

Ferner kann es vorteilhaft sein, wenn der Precursor in eine Precursorkammer eingebracht wird, die mit der Substratkammer fluidwirksam verbunden ist. Beispielsweise kann so erreicht werden, dass der Precursor nur in der Gasphase von der Precursorkammer in die Substratkammer eingebracht werden kann.

Vorteilhaft ist es, wenn der Precursor in der Precursorkammer erwärmt wird. Der Precursor kann beispielsweise in flüssiger Phase in die Precursorkammer eingebracht werden. In dieser kann er dann durch Erwärmen in die Gasphase in gezielter Weise überführt werden.

Um insbesondere optische Bauelemente ausbilden zu können, die für elektromagnetische Strahlung im ultravioletten Spektralbereich durchlässig sind, ist es günstig, wenn die dreidimensionale Struktur in Form eines Glases oder glasartig ausgebildet wird.

Ferner ist es vorteilhaft, wenn das optische Bauelement in Form einer optischen Linse ausgebildet wird. So lassen sich beispielsweise Linsen für kleine Mikroskope im ultravioletten Spektralbereich ausbilden oder Linsen zur Ein- und Auskopplung von Licht in optische Fasern.

Die eingangs gestellte Aufgabe wird ferner in einem System der eingangs beschriebenen Art erfindungsgemäß dadurch gelöst, dass das System eine Substratkammer mit einer Sauerstoff enthaltenden Atmosphäre umfasst und eine Strahlungsquelle zum Erzeugen von ein Strahlungsfeld definierender monochromatischer elektromagnetischer Strahlung mit einer Wellenlänge im ultravioletten Spektralbereich umfasst, dass ein Silizium enthaltender Precursor in die Substratkammer eingebracht ist und mit dem Substrat in Kontakt steht und dass die Strahlungsquelle angeordnet ist zum Beaufschlagen des Substrats mit dem Strahlungsfeld.

Wie bereits oben beschrieben ist es mit einem solchen System möglich, auf dem Substrat eine dreidimensionale Struktur aus Siliziumdioxid generativ auszubilden. Die Strahlungsquelle liefert hier mit der von ihr erzeugten Strahlung die erforderliche Energie. Der Precursor in Verbindung mit dem Sauerstoff in der in der Substratkammer herrschenden Atmosphäre ermöglicht durch die durch das Strahlungsfeld zugeführte Energie die Umsetzung des Precursors zu Siliziumdioxid mit einem sehr geringen Restgehalt an Kohlenstoff. Die Umsetzung des Precursors erfolgt an der Oberfläche des Substrats beziehungsweise der bereits erzeugten dreidimensionalen Struktur auf dem Substrat. Der Precursor haftet temporär an der Oberfläche des Substrats beziehungsweise an der Oberfläche der bereits erzeugten dreidimensionalen Struktur und wird mit dem Sauerstoff unter Energiezufuhr in Siliziumdioxid umgesetzt.

Günstig ist es, wenn das System eine Verdampfungsvorrichtung umfasst zum Überführen flüssigen Precursors in die Gasphase. So ist es möglich, einfach handhabbaren flüssigen Precursor bereitzustellen, der dann für die Reaktion in gewünschter Konzentration in die Gasphase überführt werden kann.

Die Ausbildung dreidimensionaler Strukturen aus Siliziumdioxid auf einem Substrat lässt sich auf einfache Weise realisieren, wenn der Precursor Silikon-Öl oder Tetraethylorthosilicat ist oder enthält.

Um das Überführen des Precursors von der flüssigen Phase in die Gasphase zu verbessern, ist es vorteilhaft, wenn das System eine Precursorerwärmungsvorrichtung umfasst zum Erwärmen des Precursors, insbesondere in der Precursorkammer, beispielsweise auf eine Temperatur in einem Bereich von etwa 20°C bis etwa 100°C. Mit der Precursorerwärmungsvorrichtung ist es insbesondere möglich, den Precursor in der Precursorkammer auf eine gewünschte Temperatur zu bringen, um den Übergang des Precursors von der flüssigen Phase in die gasförmige Phase zu verbessern. Insbesondere kann über eine Vorgabe einer Erwärmungstemperatur ein Partialdruck des gasförmigen Precursors in einer Atmosphäre in der Precursorkammer und/oder in der Substratkammer eingestellt werden.

Eine ausreichende Menge des Precursors in der Gasphase lässt sich insbesondere dadurch sicherstellen, dass der Precursor eine Viskosität in einem Bereich von etwa 1 cSt bis etwa 200 cSt aufweist. Insbesondere kann die Viskosität in einem Bereich von etwa 5 cSt bis etwa 100 cSt liegen.

Ferner ist es günstig, wenn das System eine Strahlprofilvorgabevorrichtung zum Vorgeben des Strahlprofils des Strahlungsfelds umfasst. Durch das Strahlprofil des Strahlungsfelds kann insbesondere die Form der dreidimensionalen Struktur vorgegeben werden. Durch das Beeinflussen das Strahlprofils, also insbesondere das Vorgeben desselben, kann somit direkt die dreidimensionale Struktur, insbesondere deren Form, vorgegeben werden. Beispielsweise lässt sich so die Ausbildung der dreidimensionalen Struktur mit der Strahlprofilvorgabevorrichtung auf einfache Weise steuern und gegebenenfalls auch regeln.

Ferner ist es günstig, wenn das System eine optische Abbildungsvorrichtung zum Abbilden des Strahlungsfelds auf das Substrat umfasst. Insbesondere kann die optische Abbildungsvorrichtung mindestens eine Linse und/oder mindestens einen Spiegel umfassen. Mit einer derartigen Abbildungsvorrichtung kann das Strahlungsfeld in gewünschter Weise auf das Substrat umgelenkt und gegebenenfalls auch abgebildet werden. Zudem kann die optische Abbildungsvorrichtung beispielsweise auch eine Ablenkeinrichtung umfassen, um das Strahlungsfeld relativ zum Substrat zu bewegen. So können insbesondere ausgedehnte dreidimensionale Strukturen auf dem Substrat ausgebildet werden.

Um eine möglichst hohe Energiedichte auf dem Substrat zu erreichen, ist es vorteilhaft, wenn das Strahlungsfeld quer, insbesondere senkrecht, zu einer Oberfläche des Substrats ausgerichtet ist.

Für eine optimale Umsetzung des Precursors an der Oberfläche des Substrats, ist es vorteilhaft, wenn das System eine Substraterwärmungsvorrichtung umfasst zum Erwärmen des Substrats auf eine Substrattemperatur in einem Bereich von etwa 20°C bis etwa 80°C. Insbesondere kann die Substraterwärmungsvorrichtung ausgebildet sein, um das Substrat auf eine Substrattemperatur in einem Bereich von etwa 40°C bis etwa 50°C zu erwärmen.

Vorzugsweise ist das Substrat Quarzglas (SiO₂), insbesondere unbeschichtetes Quarzglas, oder Calciumfluorid (CaF₂). Derartige Substrate sind insbesondere für elektromagnetische Strahlung im ultravioletten Spektralbereich durchlässig oder im Wesentlichen durchlässig. Dies hat insbesondere den Vorteil, dass sie durch Beaufschlagen mit ultravioletter Strahlung nicht zerstört werden können, was durch eine starke Absorption von Strahlungsenergie passieren könnte.

Um eine optimale Umsetzung des Precursors zu Siliziumdioxid auf dem Substrat zu ermöglichen, ist es vorteilhaft, wenn die Sauerstoff enthaltende Atmosphäre einen Sauerstoffanteil in einem Bereich von etwa 15% bis 100%, insbesondere etwa 20%, aufweist.

Günstig ist es, wenn ein in der Sauerstoff enthaltenden Atmosphäre herrschender Druck in einem Bereich von etwa 1 mbar bis etwa 10 bar liegt. Insbesondere kann der Druck in einem Bereich von etwa 10 mbar bis etwa 1 bar liegen.

Gemäß einer weiteren bevorzugten Ausführungsform der Erfindung kann vorgesehen sein, dass die Strahlungsquelle in Form einer kontinuierlichen oder gepulsten Strahlungsquelle ausgebildet ist. So lassen sich dreidimensionale Strukturen auf dem Substrat kontinuierlich oder durch gepulste Beaufschlagung mit elektromagnetischer Strahlung ausbilden.

Günstigerweise ist die gepulste Strahlungsquelle ausgebildet zum Erzeugen von Strahlungspulsen mit einer Pulsdauer in einem Bereich von etwa 1 ns bis etwa 20 ns, insbesondere in einem Bereich von etwa 5 ns bis etwa 10 ns. Derartige Strahlungsquellen ermöglichen es, die für die Umsetzung des Precursors zu Siliziumdioxid erforderliche Energie für eine hinreichende Zeitdauer an der Oberfläche des Substrats bereitzustellen.

Um insbesondere einen Energieeintrag auf das Substrat zur Ausbildung der dreidimensionalen Struktur in gewünschter Weise vorgeben und gegebenenfalls auch steuern und/oder regeln zu können, ist es vorteilhaft, wenn die gepulste Strahlungsquelle ausgebildet ist zum Erzeugen von Strahlungspulsen mit einer Repetitionsrate in einem Bereich von etwa 0,1 kHz bis etwa 1000 kHz, insbesondere etwa 1 kHz.

Günstigerweise ist die gepulste Strahlungsquelle ausgebildet zum Erzeugen von Strahlungspulsen mit einer Pulsenergiedichte in einem Bereich von etwa 0,1 J/cm² bis etwa 20 J/cm², insbesondere in einem Bereich von etwa 0,2 J/cm² bis etwa 10 J/cm². Strahlungspulse mit einer Pulsenergiedichte in den angegebenen Bereichen ermöglichen es insbesondere, den Precursor mit Sauerstoff in der Umgebung des Substrats in definierter Weise zu Siliziumdioxid umzusetzen.

Um die Dauer einer Bestrahlung des Substrats in gewünschter Weise vorgeben zu können, ist es vorteilhaft, wenn das System eine Zeitvorgabevorrichtung zum Vorgeben einer Bestrahlungszeit in einem Bereich von etwa 1 Minute bis etwa 50 Stunden umfasst. Insbesondere kann mit der Zeitvorgabevorrichtung eine Bestrahlungszeit in einem Bereich von etwa 10 Minuten bis etwa 500 Minuten vorgegeben werden. Beispielsweise kann die Zeitvorgabevorrichtung von einer Steuer- und/oder Regelungsvorrichtung des Systems umfasst sein.

Einfach und kostengünstig lässt sich das System ausbilden, wenn die Strahlungsquelle in Form eines Lasers ausgebildet ist. Insbesondere kann es sich bei dem Laser um einen UV-Laser handeln, beispielsweise einen Nd:YAG-Laser. Beispielsweise kann ein solcher Nd:YAG-Laser ein Strahlungsfeld mit einer Wellenlänge 355 nm erzeugen.

Vorteilhaft ist es, wenn die monochromatische Strahlung eine Wellenlänge in einem Bereich von etwa 100 nm bis etwa 400 nm, insbesondere etwa 355 nm, aufweist. Eine Umsetzung des Precursors zu Siliziumdioxid ist mit elektromagnetischer Strahlung einer Wellenlänge in den angegebenen Bereichen auf einfache Weise möglich.

Vorzugsweise ist das Substrat aus einem für das Strahlungsfeld durchlässigen Material ausgebildet. Auf diese Weise ist es insbesondere möglich, für die Umsetzung des Precursors zu Siliziumdioxid nicht genutzte Energie einfach und sicher abzuführen, nämlich durch das Substrat hindurch. Absorbiert das Substrat das Strahlungsfeld nicht, kann es insbesondere nicht überhitzen und daher auch nicht durch Beaufschlagung mit dem Strahlungsfeld zerstört werden.

Ferner ist es vorteilhaft, wenn das System eine Strahlfalle zum Absorbieren des Strahlungsfelds umfasst und wenn das Substrat in einem Strahlengang des Systems zwischen der Strahlungsquelle und der Strahlfalle angeordnet ist. Die Strahlfalle ermöglicht es also insbesondere, das Strahlungsfeld nach dem Durchstrahlen des Substrats zu absorbieren, um eine undefinierte und insbesondere auch gefahrenbergende Ausbreitung des Strahlungsfelds im System oder einer Umgebung desselben zu vermeiden.

Vorteilhaft ist es ferner, wenn das System eine Precursorkammer zum Aufnehmen des Precursors umfasst und wenn die Precursorkammer und die Substratkammer fluidwirksam miteinander verbunden sind. Insbesondere kann in einer fluidischen Verbindungsleitung zwischen der Precursorkammer und der Substratkammer eine Ventileinrichtung mit einem oder mehreren Ventilen zur Steuerung eines Durchflusses von flüssigem und/oder gasförmigem Precursor von der Precursorkammer in die Substratkammer angeordnet sein. Der Precursor kann beispielsweise in die Precursorkammer in flüssiger Phase eingebracht und dort durch entsprechende Erwärmung in die Gasphase überführt werden. Ein Partialdruck des gasförmigen Precursors in der Precursorkammer kann in gewünschter Weise eingestellt werden. Durch Öffnen und Schließen einer fluidischen Verbindung zwischen der Precursorkammer und der Substratkammer kann dann auch ein Partialdruck des gasförmigen Precursors in der Substratkammer in gewünschter Weise eingestellt werden.

Gemäß einer weiteren bevorzugten Ausführungsform der Erfindung kann vorgesehen sein, dass das System eine Steuer- und/oder Regelungsvorrichtung umfasst, welche insbesondere steuerungs- und/oder regelungswirksam mit der Strahlungsquelle und/oder der Verdampfungsvorrichtung und/oder der Strahlprofilvorgabevorrichtung und/oder der Substraterwärmungsvorrichtung und/oder der Zeitvorgabevorrichtung und/oder der Precursorerwärmungsvorrichtung verbunden ist. Mit einer solchen Steuer- und/oder Regelungsvorrichtung lassen sich insbesondere eine Substrattemperatur, eine Wellenlänge der Strahlung sowie eine Intensität desselben, eine Pulsdauer der Strahlung, eine Temperatur des Precursors und/oder ein Partialdruck des gasförmigen Precursors in der Precursorkammer und/oder der Substratkammer und/oder ein Strahlvorgabeprofil sowie eine Bestrahlungszeit in gewünschter Weise einstellen und/oder regeln. Insbesondere durch eine Einstellung der beispielhaft genannten Parameter kann auf Form und Größe der auszubildenden dreidimensionalen Struktur aus Siliziumdioxid in gewünschter Weise Einfluss genommen werden.

Des Weiteren wird die Verwendung eines der oben beschriebenen Systeme zur Durchführung eines der oben beschriebenen Verfahren vorgeschlagen. Insbesondere können die Systeme zur Durchführung der beschriebenen Verfahren verwendet werden zur Ausbildung von Linsen, Phasenplatten zur ortsabhängigen Phasenkorrektur von Laserstrahlungsfeldern, Mikrolinsenarrays, asphärischen Optiken und diffraktiven optischen Elementen.

Die vorstehende Beschreibung umfasst somit insbesondere die nachfolgend in Form durchnummerierter Sätze definierten Ausführungsformen von Verfahren und Systemen zum Herstellen einer dreidimensionalen Struktur:
1. Verfahren zum Herstellen einer dreidimensionalen Struktur (12) auf einem Substrat (14), insbesondere zur Ausbildung eines optischen Bauelements (58), welche dreidimensionale Struktur (12) aus Siliziumdioxid oder im Wesentlichen aus Siliziumdioxid ausgebildet wird, dadurch gekennzeichnet, dass die dreidimensionale Struktur (12) generativ ausgebildet wird, dass das Substrat (14) in einer Sauerstoff enthaltenden Atmosphäre mit einem Silizium enthaltenden Precursor in Kontakt gebracht und mit ein Strahlungsfeld (28) definierender monochromatischer elektromagnetischer Strahlung (26) mit einer Wellenlänge im ultravioletten Spektralbereich beaufschlagt wird.
2. Verfahren nach Satz 1, dadurch gekennzeichnet, dass der Precursor (20) dem Substrat (14) aus der Gasphase zugeführt wird.
3. Verfahren nach einem der voranstehenden Sätze, dadurch gekennzeichnet, dass als Precursor (20) Silikon-Öl oder Tetraethylorthosilicat eingesetzt wird.
4. Verfahren nach einem der voranstehenden Sätze, dadurch gekennzeichnet, dass der Precursor (20) auf eine Temperatur in einem Bereich von etwa 20°C bis etwa 100°C erwärmt wird.
5. Verfahren nach einem der voranstehenden Sätze, dadurch gekennzeichnet, dass der Precursor (20) mit einer Viskosität in einem Bereich von etwa 1 cSt bis etwa 200 cSt, insbesondere in einem Bereich von etwa 5 cSt bis etwa 100 cSt, eingesetzt wird.
6. Verfahren nach einem der voranstehenden Sätze, dadurch gekennzeichnet, dass eine Form der dreidimensionalen Struktur (12) durch ein Strahlprofil (46) des Strahlungsfelds (28) vorgegeben wird.
7. Verfahren nach einem der voranstehenden Sätze, dadurch gekennzeichnet, dass das Strahlungsfeld (28) mit einer optischen Abbildungsvorrichtung (30), insbesondere umfassend mindestens eine Linse (34), auf das Substrat (14) abgebildet wird.
8. Verfahren nach einem der voranstehenden Sätze, dadurch gekennzeichnet, dass das Substrat (14) mit dem Strahlungsfeld (28) quer, insbesondere senkrecht, zu einer Oberfläche (56) des Substrats (14) beaufschlagt wird.
9. Verfahren nach einem der voranstehenden Sätze, dadurch gekennzeichnet, dass das Substrat (14) auf eine Substrattemperatur in einem Bereich von etwa 20°C bis etwa 80°C, insbesondere in einem Bereich von etwa 40°C bis etwa 50°C, erwärmt wird.
10. Verfahren nach einem der voranstehenden Sätze, dadurch gekennzeichnet, dass als Substrat (14) Quarzglas (SiO₂), insbesondere unbeschichtetes Quarzglas, oder Calciumfluorid (CaF₂) eingesetzt wird.
11. Verfahren nach einem der voranstehenden Sätze, dadurch gekennzeichnet, dass das Verfahren in einer Atmosphäre mit einem Sauerstoffanteil in einem Bereich von etwa 15% bis 100%, insbesondere etwa 20%, durchgeführt wird.
12. Verfahren nach einem der voranstehenden Sätze, dadurch gekennzeichnet, dass die Sauerstoff enthaltende Atmosphäre unter einem Druck in einem Bereich von etwa 1 mbar bis etwa 10 bar, insbesondere in einem Bereich von etwa 10 mbar bis etwa 1 bar, gehalten wird.
13. Verfahren nach einem der voranstehenden Sätze, dadurch gekennzeichnet, dass das Substrat (14) kontinuierlich oder gepulst mit dem Strahlungsfeld (28) beaufschlagt wird.
14. Verfahren nach Satz 13, dadurch gekennzeichnet, dass das Substrat (14) gepulst mit einer Pulsdauer in einem Bereich von etwa 1 ns bis etwa 20 ns, insbesondere in einem Bereich von etwa 5 ns bis etwa 10 ns, mit dem Strahlungsfeld beaufschlagt wird.
15. Verfahren nach Satz 13 oder 14, dadurch gekennzeichnet, dass das Substrat (14) gepulst mit einer Repetitionsrate in einem Bereich von etwa 0,1 kHz bis etwa 1000 kHz, insbesondere etwa 1 kHz, mit dem Strahlungsfeld (28) beaufschlagt wird.
16. Verfahren nach einem der Sätze 13 bis 15, dadurch gekennzeichnet, dass das Substrat (14) gepulst mit dem Strahlungsfeld (28) mit einer Pulsenergiedichte in einem Bereich von etwa 0,1 J/cm² bis etwa 20 J/cm², insbesondere in einem Bereich von etwa 0,2 J/cm² bis etwa 10 J/cm², beaufschlagt wird.
17. Verfahren nach einem der voranstehenden Sätze, dadurch gekennzeichnet, dass das Substrat (14) während einer Bestrahlungszeit in einem Bereich von etwa 1 Minute bis etwa 50 Stunden, insbesondere in einem Bereich von etwa 10 Minuten bis etwa 500 Minuten, mit dem Strahlungsfeld (28) beaufschlagt wird.
18. Verfahren nach einem der voranstehenden Sätze, dadurch gekennzeichnet, dass die monochromatische Strahlung (26) mit einem Laser (50) erzeugt wird, insbesondere mit einem Nd:YAG-Laser.
19. Verfahren nach einem der voranstehenden Sätze, dadurch gekennzeichnet, dass die monochromatische Strahlung (26) mit einer Wellenlänge in einem Bereich von etwa 100 nm bis etwa 400 nm, insbesondere mit etwa 355 nm, eingesetzt wird.
20. Verfahren nach einem der voranstehenden Sätze, dadurch gekennzeichnet, dass das Substrat (14) mit dem Strahlungsfeld (28) durchstrahlt wird.
21. Verfahren nach Satz 20, dadurch gekennzeichnet, dass das Strahlungsfeld (28) nach dem Durchstrahlen des Substrats (14) absorbiert wird, insbesondere von einer Strahlfalle (36).
22. Verfahren nach einem der voranstehenden Sätze, dadurch gekennzeichnet, dass das Substrat (14) in einer Substratkammer (16) angeordnet wird, in welcher die sauerstoffenthaltende Atmosphäre herrscht.
23. Verfahren nach Satz 22, dadurch gekennzeichnet, dass der Percursor (20) in eine Precursorkammer (18) eingebracht wird, die mit der Substratkammer (16) fluidwirksam verbunden ist.
24. Verfahren nach Satz 23, dadurch gekennzeichnet, dass der Precursor (20) in der Precursorkammer (18) erwärmt wird.
25. Verfahren nach einem der voranstehenden Sätze, dadurch gekennzeichnet, dass die dreidimensionale Struktur (12) in Form eines Glases oder glasartig ausgebildet wird.
26. Verfahren nach einem der voranstehenden Sätze, dadurch gekennzeichnet, dass das optische Bauelement (58) in Form einer optischen Linse (58) ausgebildet wird.
27. System (10) zum Herstellen einer dreidimensionalen Struktur (12) auf einem Substrat (14), insbesondere zur Ausbildung eines optischen Bauelements (58), welche dreidimensionale Struktur (12) aus Siliziumdioxid oder im Wesentlichen aus Siliziumdioxid ausgebildet wird, dadurch gekennzeichnet, dass das System (10) eine Substratkammer (16) mit einer mit einer Sauerstoff enthaltenden Atmosphäre und eine Strahlungsquelle (24) zum Erzeugen von ein Strahlungsfeld (28) definierender monochromatischer elektromagnetischer Strahlung (26) mit einer Wellenlänge im ultravioletten Spektralbereich umfasst, dass ein Silizium enthaltender Precursor (20) in die Substratkammer (16) eingebracht ist und mit dem Substrat (14) in Kontakt steht und dass die Strahlungsquelle (24) angeordnet ist zum Beaufschlagen des Substrats (14) mit dem Strahlungsfeld (28).
28. System nach Satz 27, dadurch gekennzeichnet, dass das System (10) eine Verdampfungsvorrichtung (74) umfasst zum Überführen flüssigen Precursors (20) in die Gasphase.
29. System nach Satz 27 oder 28, dadurch gekennzeichnet, dass der Precursor (20) Silikon-Öl oder Tetraethylorthosilicat ist oder enthält.
30. System nach einem der Sätze 27 bis 29, dadurch gekennzeichnet, dass das System (10) eine Precursorerwärmungsvorrichtung (76) umfasst zum Erwärmen des Precursors (20) auf eine Temperatur in einem Bereich von etwa 20°C bis etwa 100°C.
31. System nach einem der Sätze 27 bis 30, dadurch gekennzeichnet, dass der Precursor (20) eine Viskosität in einem Bereich von etwa 1 cSt bis etwa 200 cSt aufweist, insbesondere in einem Bereich von etwa 5 cSt bis etwa 100 cSt.
32. System nach einem der Sätze 27 bis 31, dadurch gekennzeichnet, dass das System (10) eine Strahlprofilvorgabevorrichtung (70) zum Vorgeben des Strahlprofils (46) des Strahlungsfelds (28) umfasst.
33. System nach einem der Sätze 27 bis 32, dadurch gekennzeichnet, dass das System (10) eine optische Abbildungsvorrichtung (30), insbesondere umfassend mindestens eine Linse (34) und/oder mindestens einen Spiegel (32), zum Abbilden des Strahlungsfelds (28) auf das Substrat (14) umfasst.
34. System nach einem der Sätze 27 bis 33, dadurch gekennzeichnet, dass das Strahlungsfeld (28) quer, insbesondere senkrecht, zu einer Oberfläche (56) des Substrats (14) ausgerichtet ist.
35. System nach einem der Sätze 27 bis 34, dadurch gekennzeichnet, dass das System (10) eine Substraterwärmungsvorrichtung (72) umfasst zum Erwärmen des Substrats (14) auf eine Substrattemperatur in einem Bereich von etwa 20°C bis etwa 80°C, insbesondere in einem Bereich von etwa 40°C bis etwa 50°C.
36. System nach einem der Sätze 27 bis 35, dadurch gekennzeichnet, dass das Substrat (14) Quarzglas (SiO₂), insbesondere unbeschichtetes Quarzglas, oder Calciumfluorid (CaF₂) ist.
37. System nach einem der Sätze 27 bis 36, dadurch gekennzeichnet, dass die Sauerstoff enthaltende Atmosphäre einen Sauerstoffanteil in einem Bereich von etwa 15% bis 100%, insbesondere etwa 20%, aufweist.
38. System nach einem der Sätze 27 bis 36, dadurch gekennzeichnet, dass ein in der Sauerstoff enthaltenden Atmosphäre herrschender Druck in einem Bereich von etwa 1 mbar bis etwa 10 bar, insbesondere in einem Bereich von etwa 10 mbar bis etwa 1 bar, liegt.
39. System nach einem der Sätze 27 bis 36, dadurch gekennzeichnet, dass die Strahlungsquelle (24) in Form einer kontinuierlichen oder gepulsten Strahlungsquelle (24) ausgebildet ist.
40. System nach Satz 39, dadurch gekennzeichnet, dass die gepulste Strahlungsquelle (24) ausgebildet ist zum Erzeugen von Strahlungspulsen mit einer Pulsdauer in einem Bereich von etwa 1 ns bis etwa 20 ns, insbesondere in einem Bereich von etwa 5 ns bis etwa 10 ns.
41. System nach Satz 39 oder 40, dadurch gekennzeichnet, dass die gepulste Strahlungsquelle (24) ausgebildet ist zum Erzeugen von Strahlungspulsen mit einer Repetitionsrate in einem Bereich von etwa 0,1 kHz bis etwa 1000 kHz, insbesondere etwa 1 kHz.
42. System nach einem der Sätze 39 bis 41, dadurch gekennzeichnet, dass die gepulste Strahlungsquelle (24) ausgebildet ist zum Erzeugen von Strahlungspulsen mit einer Pulsenergiedichte in einem Bereich von etwa 0,1 J/cm² bis etwa 20 J/cm², insbesondere in einem Bereich von etwa 0,2 J/cm² bis etwa 10 J/cm².
43. System nach einem der Sätze 27 bis 42, dadurch gekennzeichnet, dass das System (10) eine Zeitvorgabevorrichtung (86) zum Vorgeben einer Bestrahlungszeit in einem Bereich von etwa 1 Minute bis etwa 50 Stunden, insbesondere in einem Bereich von etwa 10 Minuten bis etwa 500 Minuten, umfasst.
44. System nach einem der Sätze 27 bis 43, dadurch gekennzeichnet, dass die Strahlungsquelle (24) in Form eines Lasers (50) ausgebildet ist, insbesondere in Form eines Nd:YAG-Laser.
45. System nach einem der Sätze 27 bis 44, dadurch gekennzeichnet, dass die monochromatische Strahlung (26) eine Wellenlänge in einem Bereich von etwa 100 nm bis etwa 400 nm, insbesondere etwa 355 nm, aufweist.
46. System nach einem der Sätze 27 bis 45, dadurch gekennzeichnet, dass das Substrat (14) aus einem für das Strahlungsfeld (28) durchlässigen Material ausgebildet ist.
47. System nach Satz 46, dadurch gekennzeichnet, dass das System eine Strahlfalle (36) zum Absorbieren des Strahlungsfelds (28) umfasst und dass das Substrat (14) in einem Strahlengang des Systems (10) zwischen der Strahlungsquelle (24) und der Strahlfalle (36) angeordnet ist.
48. System nach einem der Sätze 27 bis 47, dadurch gekennzeichnet, dass das System (10) eine Precursorkammer (18) zum Aufnehmen des Precursors (20) umfasst und dass die Precursorkammer (18) und die Substratkammer (16) fluidwirksam miteinander verbunden sind.
49. System nach einem der Sätze 27 bis 48, dadurch gekennzeichnet, dass das System (10) eine Steuer- und/oder Regelungsvorrichtung (82) umfasst, welche insbesondere steuerungs- und/oder regelungswirksam mit der Strahlungsquelle (24) und/oder der Verdampfungsvorrichtung (74) und/oder der Strahlprofilvorgabevorrichtung (70) und/oder der Substraterwärmungsvorrichtung (72) und/oder der Zeitvorgabevorrichtung (86) und/oder der Precursorerwärmungsvorrichtung (76) verbunden ist.
50. Verwendung eines Systems (10) nach einem der Sätze 27 bis 49 zur Durchführung eines Verfahrens nach einem der Sätze 1 bis 26, insbesondere zur Ausbildung von Linsen, Phasenplatten zur ortsabhängigen Phasenkorrektur von Laserstrahlungsfeldern, Mikrolinsenarrays (60), asphärischer Optiken und diffraktiver optischer Elemente.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines Ausführungsbeispiels eines Systems zum Herstellen einer dreidimensionalen Struktur auf einem Substrat;
- Figur 2:: eine Darstellung eines Vergleichs zwischen einer Linsenform einer dreidimensionalen Linse und einem Strahlprofil der zur Ausbildung der Linse eingesetzten elektromagnetischen Strahlung;
- Figur 3:: eine beispielhafte Darstellung der Abhängigkeit einer Höhe der dreidimensionalen Struktur als Funktion der Bestrahlungsdauer bei zwei verschiedenen Pulsenergien;
- Figur 4:: eine schematische Darstellung des Funktionsprinzips eines Hartmann-Shack-Sensors beim Auftreffen einer ebenen Wellenfront;
- Figur 5:: eine schematische Darstellung des Funktionsprinzips eines Hartmann-Shack-Sensors beim Auftreffen einer gekrümmten Wellenfront;
- Figur 6:: eine schematische Darstellung eines weiteren Ausführungsbeispiels eines Systems zum Herstellen einer dreidimensionalen Struktur;
- Figur 7:: eine schematische Darstellung eines weiteren Ausführungsbeispiels eines Systems zur Herstellung einer dreidimensionalen Struktur.

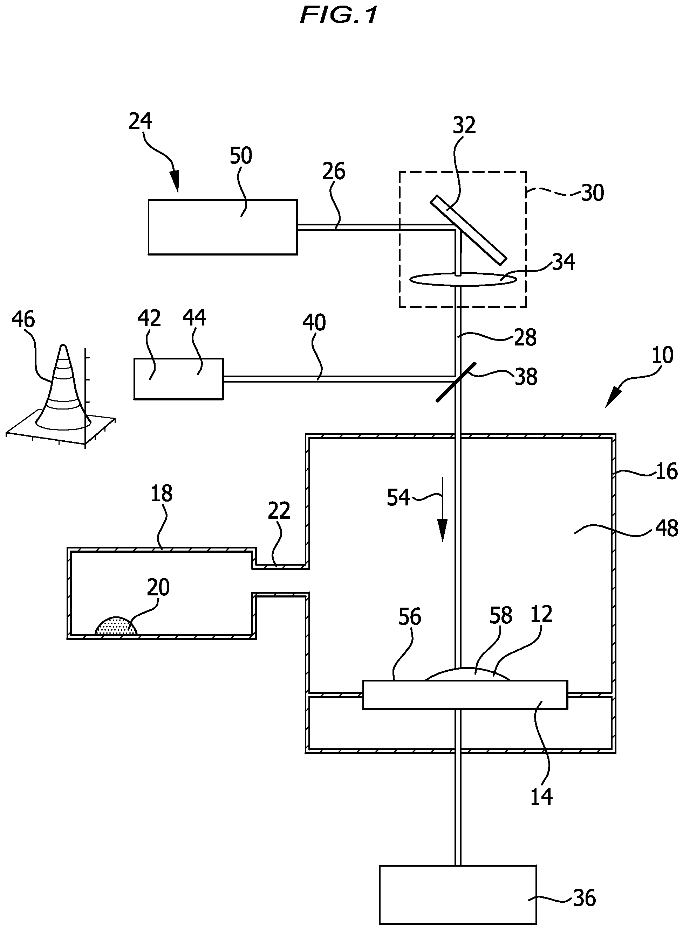

In Figur 1 ist schematisch ein Ausführungsbeispiel eines insgesamt mit dem Bezugszeichen 10 bezeichneten Systems zum Herstellen einer dreidimensionalen Struktur 12 auf einem Substrat 14 dargestellt.

Das System 10 umfasst eine das Substrat 14 aufnehmende Substratkammer 16.

Ferner umfasst das System 10 eine Precursorkammer 18 zum Aufnehmen eines Silizium enthaltenden Precursors 20.

Die Precursorkammer 18 und die Substratkammer 16 sind über eine Verbindung 22 fluidwirksam miteinander verbunden.

Des Weiteren umfasst das System 10 eine Strahlungsquelle 24 zum Erzeugen von elektromagnetischer Strahlung 26, die ein Strahlungsfeld 28 definiert.

Weiterhin umfasst das System 10 eine optische Abbildungsvorrichtung 30 zum Abbilden des Strahlungsfelds 28 auf das Substrat 14. Die Abbildungsvorrichtung 30 umfasst bei dem in Figur 1 dargestellten Ausführungsbeispiel einen Umlenkspiegel 32 sowie eine Linse 34.

Ferner umfasst das System 10 eine Strahlfalle 36.

Die Strahlfalle 36 ist derart angeordnet, dass das Substrat 14 im Strahlengang des Systems 10 zwischen der Strahlungsquelle 24 und der Strahlfalle 36 angeordnet ist.

Zwischen dem Substrat 14 und der Abbildungsvorrichtung 30 ist ein Strahlteiler 38 angeordnet, welcher einen Strahlungsfeldanteil 40 des Strahlungsfelds 28 auf einen zweidimensionalen Detektor 42 in Form einer CCD-Kamera 44 umlenkt. Mit der CCD-Kamera 44 kann das in Figur 1 schematisch dargestellte Strahlprofil 46 des Strahlungsfelds 28 aufgenommen werden, und zwar sowohl räumlich als auch intensitätsabhängig.

Zur Ausbildung der dreidimensionalen Struktur 12 auf dem Substrat 14 wurden bei einem Ausführungsbeispiel zur Durchführung eines Herstellungsverfahrens mit dem System 10 die nachfolgend beschriebenen Parameter beziehungsweise Verfahrensparameter verwendet.

Als Precursor 20 wurde ein Silikon-Öl der Firma Sigma Aldrich mit der CAS-Nr. 63148-62-9 eingesetzt. Die Viskosität des Precursors 20 bei 25° C betrug 5 cSt.

Die Summenformel des Silicon-Öls ist wie folgt darstellbar:

Me₃Si-O-[SiMe₂-O]ₙ-SiMe₃

Als Substrat 14 wurde ein unbeschichtetes Quarzglas eingesetzt. Die Temperatur des Precursors 20 betrug lokal 40°C. Der Druck im Innenraum 48 der Substratkammer 16 betrug 1 atm. Der Sauerstoffgehalt in der Substratkammer 16 lag bei etwa 20%.

Als Strahlungsquelle 24 wurde ein Laser 50 in Form eines Nd:YAG-Lasers eingesetzt. Zur Beaufschlagung des Substrats 14 wurde die 3. Harmonische dieses Lasers mit einer Wellenlänge vom 355nm eingesetzt. Der Laser 50 wurde gepulst betrieben mit einer Pulsdauer von 10 ns und einer Pulsenergie von 1 mJ. Das Strahlungsfeld 28 wurde auf eine Fläche von 190 x 180 µm² fokussiert. Dies entspricht der 1/e²-Fläche des Strahlungsfelds 28.

Eine maximale Energiedichte ergibt sich bei den genannten Parametern zu 7 J/cm². Über eine Bestrahlungszeit von 17 Stunden wurden mit einer Repetitionsrate von 1kHz insgesamt 60 Millionen Strahlungspulse erzeugt. Die Wachstumsrate der dreidimensionalen Struktur 12 betrug 3 pm/Sekunde.

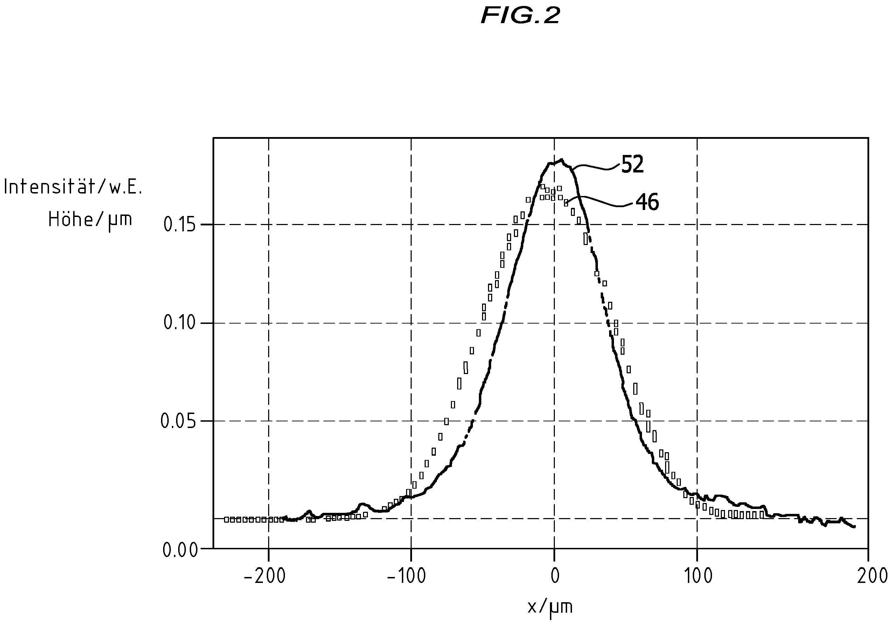

Figur 2 zeigt einen Vergleich zwischen der dreidimensionalen Struktur 12 und dem Strahlprofil 46 des Strahlungsfelds 28.

Die räumliche Ausdehnung der dreidimensionalen Struktur 12, die die Form einer Linse aufweist, ist in Figur 2 durchgezogen dargestellt und mit dem Bezugszeichen 54 bezeichnet. Figur 2 zeigt die Höhe in µm in Abhängigkeit einer räumlichen Ausdehnung quer zu einer Strahlrichtung 54, die senkrecht zu einer Oberfläche 56 des Substrats 14 gerichtet ist.

Die durch die dreidimensionale Struktur 12 definierte Linse 58 weist eine Ausdehnung von etwa 400 µm auf, jedoch eine Höhe von nur etwa 180 nm.

In Figur 2 ist ferner das gemessene Strahlprofil 46 des Strahlungsfelds 28 dargestellt, und zwar als Funktion einer Intensität in willkürlichen Einheiten in Abhängigkeit einer räumlichen Ausdehnung.

Es zeigt sich, dass die Linsenform 52 und das Strahlprofil 46 in etwa übereinstimmen.

Mit dem System 10 ist es daher möglich, eine Form der Linse 58, mithin also die Linsenform 52, durch Vorgabe des Strahlprofils 46 einzustellen.

Die ausgebildete Linse 58 auf dem Substrat 14 ist abriebfest. Dies wurde durch einen Wischtest mit Aceton bestätigt.

Ferner wurde zudem festgestellt, dass eine Form der Linse 58 wie beschrieben zum Strahlprofil 46 korreliert. So führte eine zur Kontrolle durchgeführte elliptische Strahlfokussierung zu einer elliptischen Ablagerung von Siliziumdioxid auf dem Substrat 14.

Eine atomare Analyse der Linse 58 mittels energiedispersiver Röntgenspektroskopie (EDX) ergab einen Anteil von 64% Sauerstoff, 33,2% Silizium und 2,7% Kohlenstoff in der Struktur 12. Mithin enthält die Linse 58 also nahezu keinen Kohlenstoff und fast ausschließlich Siliziumdioxid.

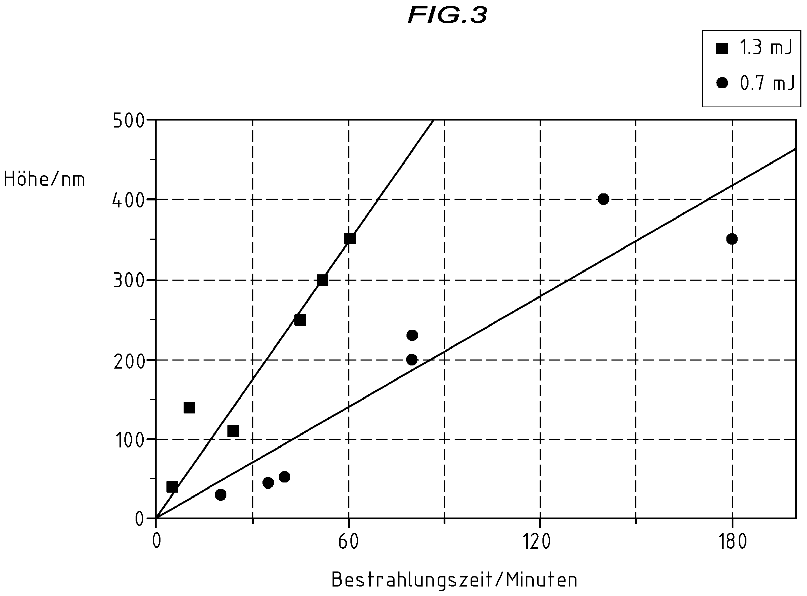

In einem weiteren Versuch wurde eine Abhängigkeit einer Höhe der Struktur 12 bezogen auf die Oberfläche 56 des Substrats 14 bei unterschiedlichen Pulsenergien gemessen. Das Ergebnis ist in Figur 3 dargestellt. Es ergab sich also sowohl für eine Pulsenergie von 0,7 mJ als auch für eine Pulsenergie von 1,3 mJ jeweils ein nahezu linearer Zusammenhang zwischen einer Höhe der Linse 58 bezogen auf die Oberfläche 56 in Abhängigkeit der Bestrahlungszeit in Minuten.

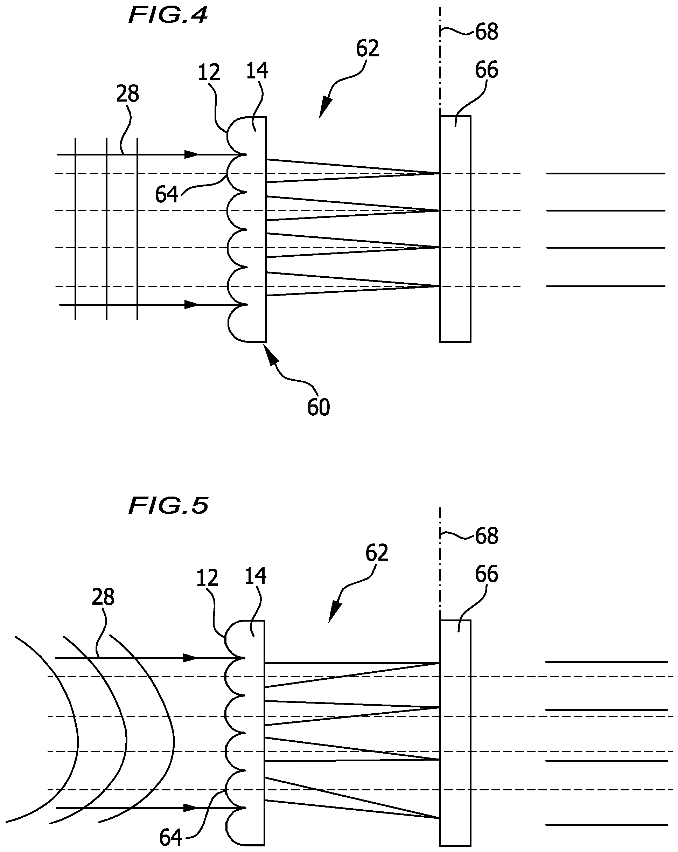

Die Figuren 4 und 5 zeigen ein Anwendungsbeispiel für dreidimensionale Strukturen 12, die auf einem Substrat 14 ausgebildet werden, und zwar in Form eines Mikrolinsenarrays 60. Ein solches Mikrolinsenarray 60 kann beispielsweise als Teil eines Hartmann-Shack-Sensors 62 eingesetzt werden.

Das Mikrolinsenarray 60 umfasst ein Substrat 14 aus Glas mit darauf regelmäßig angeordneten linienförmigen Mikrolinsen 64 und einem 2D-Detektor 66 in Form eines CMOS-Kamerachips.

Fällt auf die Linienmaske ein kollimierter Lichtstrahl einer Punktquelle, erzeugt jede Mikrolinse 64 in der Fokalebene 68, welche durch den 2D-Detektor definiert wird, ein Punktbild, das entsprechend der lokalen Neigung der Wellenfront des Strahlungsfelds 28 über der jeweiligen Mikrolinse 64 von seiner nominellen Position verschoben sein kann.

Ist der kollimierte Lichtstrahl, also das Strahlungsfeld 28, wie schematisch in Figur 5 dargestellt, gestört, beispielsweise etwas defokussiert, verschieben sich die Punktbilder jeder Mikrolinse 64. Durch Vermessen des Abstandes der Punktbilder bei einer Beleuchtung einmal ohne und einmal mit optischer Störung erhält man die Verkippung der Wellenfront in zwei Richtungen über die jeweilige Mikrolinse 64. Aus allen Verkippungen zusammen können dann beispielsweise Abbildungsfehler eines Objektivs bestimmt werden.

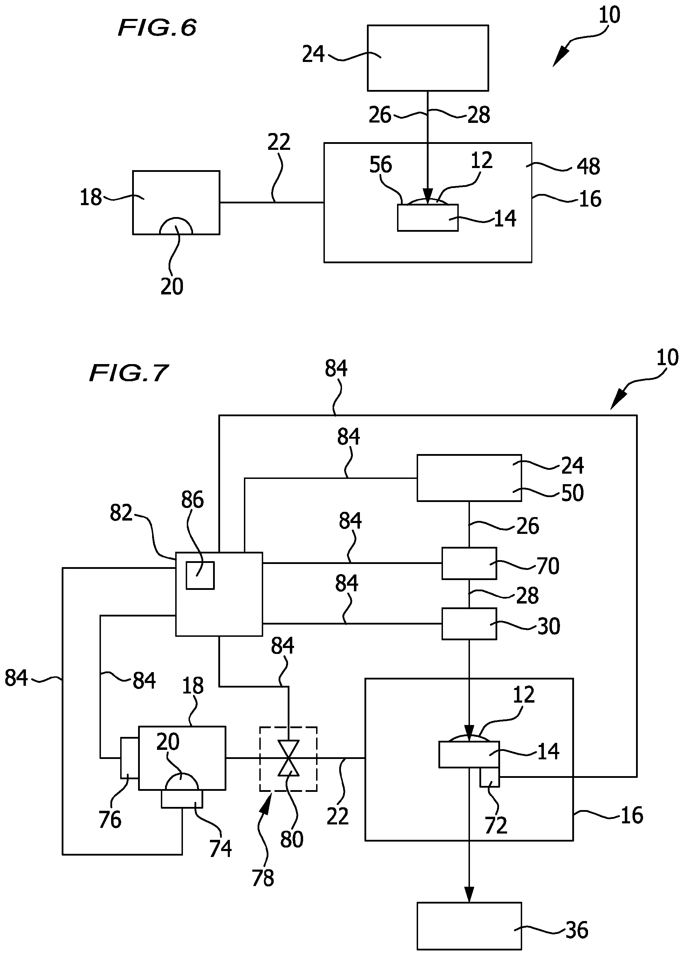

Ein weiteres Ausführungsbeispiel eines optischen Systems 10 ist in Figur 6 dargestellt. Es umfasst als wesentliche Komponenten eine Strahlungsquelle 24 zum Erzeugen von ein Strahlungsfeld 28 definierender monochromatischer elektromagnetischer Strahlung 26, eine Substratkammer 16, in der ein Substrat 14 angeordnet ist, sowie eine Precursorkammer 18, die über eine Verbindung 22 fluidwirksam mit der Substratkammer 16 verbunden ist.

In die Precursorkammer 18 ist ein Precursor 20 eingebracht.

Die dreidimensionale Struktur 12 bildet sich auf der Oberfläche 56 des Substrats durch Umsetzung von an der Oberfläche 56 anhaftendem Precursor in einer Sauerstoff enthaltenden Atmosphäre im Innenraum 48 durch die durch das Strahlungsfeld 28 bereitgestellte Energie.

Ein weiteres Ausführungsbeispiel eines Systems 10 ist in Figur 7 schematisch dargestellt. Es entspricht in seinem grundsätzlichen Aufbau dem in Figur 6 dargestellten Ausführungsbeispiel, umfasst jedoch noch weitere Komponenten.

Wie beim Ausführungsbeispiel der Figur 1 umfasst das System 10 aus Figur 7 eine Strahlfalle 36 zum Absorbieren der Strahlung 26, die sämtliche Komponenten im Strahlengang zwischen der Strahlungsquelle 24, die in Form eines Lasers 50 ausgebildet ist, und der Strahlfalle 36 durchstrahlt.

Wie bereits beschrieben kann durch Vorgabe des Strahlprofils 46 die Form der dreidimensionalen Struktur 12 vorgegeben werden. Um die Form gezielt einstellen beziehungsweise vorgeben zu können, umfasst das System 10 ferner eine Strahlprofilvorgabevorrichtung 70.

Die Strahlprofilvorgabevorrichtung 70 ist bei dem in Figur 7 dargestellten Ausführungsbeispiel im Strahlengang vor der Abbildungsvorrichtung 30 angeordnet. Sie kann alternativ auch im Strahlengang nach der Abbildungsvorrichtung 30 angeordnet sein.

Zum Temperieren des Substrats 14 dient eine Substraterwärmungsvorrichtung 72 mit welcher das Substrat 14 auf eine Temperatur im Bereich zwischen 20°C bis etwa 80°C temperiert werden kann.

Um den Precursor 20 von der flüssigen Phase in die Gasphase zu überführen, umfasst das System 10 eine Verdampfungsvorrichtung 74, die an der Precursorkammer 18 angeordnet ist.

Alternativ oder zusätzlich ist an der Precursorkammer 18 zudem eine Precursorerwärmungsvorrichtung 76 angeordnet. Insbesondere kann bei einem alternativen Ausführungsbeispiel die Precursorerwärmungsvorrichtung 76 durch die Verdampfungsvorrichtung 74 gebildet sein.

Des Weiteren kann in der Verbindung 22 eine Ventileinrichtung 78 umfassend ein Ventil 80 angeordnet sein, um die fluidische Verbindung 22 zwischen der Precursorkammer 18 und der Substratkammer 16 zu öffnen und zu schließen.

Zum Steuern und/oder Regeln des Systems 10 dient eine Steuerungs- und/ oder Regelungsvorrichtung 82. Diese ist steuerungswirksam über Steuerungsleitungen mit der Strahlungsquelle 24, der Verdampfungsvorrichtung 74 der Strahlprofilvorgabevorrichtung 70, der Substraterwärmungsvorrichtung 72 und der Precursorerwärmungsvorrichtung 76 verbunden.

Ferner kann die Steuerungs- und/oder Regelungsvorrichtung 82 optional auch mit der Abbildungsvorrichtung 30 steuerungswirksam verbunden sein.

Zum Vorgeben einer Bestrahlungszeit umfasst das System 10 eine Zeitvorgabevorrichtung 86. Diese kann insbesondere von der Steuer- und/oder Regelungsvorrichtung umfasst sein.

Beispielsweise kann die Steuer- und/oder Regelungsvorrichtung in Form eines Computers ausgebildet sein.

Ferner kann das System 10 eine nicht näher dargestellte Bewegungsvorrichtung umfassen, um das Substrat 14 und das Strahlungsfeld 28 relativ zueinander zu bewegen, um auch größere Strukturen, zum Beispiel Linsen mit anpassbarer Form, generativ auf dem Substrat 14 auszubilden.

Zudem besteht die Möglichkeit, die Herstellung präziser Freiform-Optiken zu optimieren, beispielsweise dadurch, dass eine erzeugte Geometrie der dreidimensionalen Struktur 12 direkt vermessen wird, zum Beispiel über interferometrische Messmethoden, und dass die Mikrostrukturierung gegebenenfalls in einem Regelkreislauf während des Herstellungsverfahrens nachgeregelt wird.

Mit den beschriebenen Systemen 10 können insbesondere die eingangs beschriebenen Verfahren durchgeführt werden. Mit diesen lassen sich insbesondere Linsen mit freier Formgebung erzeugen. Diese können insbesondere für kleine Mikroskope im ultravioletten Spektralbereich eingesetzt werden. Diese haben den Vorteil, dass elektromagnetische Strahlung im ultravioletten Spektralbereich transmittiert wird.

Ferner können derartige Linsen auch zur Ein- und Auskopplung von Licht in optische Fasern eingesetzt werden, denn sie haben den Vorteil einer hohen Zerstörungsschwelle.

Weiterhin lassen sich mit den beschriebenen Verfahren auch Phasenplatten zur ortsabhängigen Phasenkorrektur von Laserstrahlung erzeugen. Dies ist in vorteilhafterweise insbesondere aufgrund der dünnen Schichten, die mit dem System 10 ausgebildet werden können, möglich.

Außerdem lassen sich beispielsweise Mikrolinsenarrays ausbilden, die insbesondere zur Homogenisierung von Laserlicht für Wellenfrontsensoren wie die oben beschriebenen Hartmann-Shack-Sensoren oder für 3D-Kameras eingesetzt werden können.

Weiterhin lassen sich die Verfahren zum Rapid Prototyping einsetzen.

Es lassen sich mit den beschriebenen Verfahren zudem asphärische Optiken ausbilden.

Ferner ist es möglich, diffraktive optische Elemente herzustellen.

Die beschriebenen Einsatzmöglichkeiten der beschriebenen Systeme und Verfahren sind nicht abschließend. In jedem Fall ist es möglich, Freiformoptiken aus praktisch reinem Siliziumdioxid auf für UV-Strahlung durchlässigen Substraten auszubilden, wobei die Freiformoptiken eine hohe Transmission im UV-Bereich, einen hohen abrasiven Widerstand, eine hohe chemische Beständigkeit sowie eine hohe laserinduzierte Zerstörschwelle aufweisen.

Im Gegensatz zum bekannten Ionenätzen dreidimensionaler Strukturen auf einem Substrat ermöglichen die beschriebenen Verfahren und Systeme die Ausbildung praktisch beliebiger Strukturen ohne zusätzliche aufwendige Prozessschritte.

### Bezugszeichenliste

- 10: System
- 12: Struktur
- 14: Substrat
- 16: Substratkammer
- 18: Precursorkammer
- 20: Precursor
- 22: Verbindung
- 24: Strahlungsquelle
- 26: Strahlung
- 28: Strahlungsfeld
- 30: Abbildungsvorrichtung
- 32: Umlenkspiegel
- 34: Linse
- 36: Strahlfalle
- 38: Strahlteiler
- 40: Strahlungsfeldanteil
- 42: Detektor
- 44: CCD-Kamera
- 46: Strahlprofil
- 48: Innenraum
- 50: Laser
- 52: Linsenform
- 54: Strahlrichtung
- 56: Oberfläche
- 58: Linse
- 60: Mikrolinsenarray
- 62: Hartmann-Shack-Sensor
- 64: Mikrolinse
- 66: 2D-Detektor
- 68: Fokalebene
- 70: Strahlprofilvorgabevorrichtung
- 72: Substraterwärmungsvorrichtung
- 74: Verdampfungsvorrichtung
- 76: Precursorerwärmungsvorrichtung
- 78: Ventileinrichtung
- 80: Ventil
- 82: Steuerungs- und/oder Regelungsvorrichtung
- 84: Steuerungsleitung
- 86: Zeitvorgabevorrichtung

## Patentansprüche

1. Verfahren zum Herstellen einer dreidimensionalen Struktur (12) auf einem Substrat (14), insbesondere zur Ausbildung eines optischen Bauelements (58), welche dreidimensionale Struktur (12) aus Siliziumdioxid oder im Wesentlichen aus Siliziumdioxid ausgebildet wird, **dadurch gekennzeichnet, dass** die dreidimensionale Struktur (12) generativ ausgebildet wird, dass das Substrat (14) in einer Sauerstoff enthaltenden Atmosphäre mit einem Silizium enthaltenden Precursor in Kontakt gebracht und mit ein Strahlungsfeld (28) definierender monochromatischer elektromagnetischer Strahlung (26) mit einer Wellenlänge im ultravioletten Spektralbereich beaufschlagt wird.

2. Verfahren nach Anspruch 1, **dadurch gekennzeichnet, dass**
a) der Precursor (20) dem Substrat (14) aus der Gasphase zugeführt wird
und/oder
b) als Precursor (20) Silikon-Öl oder Tetraethylorthosilicat eingesetzt wird
und/oder
c) der Precursor (20) auf eine Temperatur in einem Bereich von etwa 20°C bis etwa 100°C erwärmt wird
und/oder
d) der Precursor (20) mit einer Viskosität in einem Bereich von etwa 1 cSt bis etwa 200 cSt, insbesondere in einem Bereich von etwa 5 cSt bis etwa 100 cSt, eingesetzt wird.

3. Verfahren nach einem der voranstehenden Ansprüche, **dadurch gekennzeichnet, dass**
a) eine Form der dreidimensionalen Struktur (12) durch ein Strahlprofil (46) des Strahlungsfelds (28) vorgegeben wird
und/oder
b) das Strahlungsfeld (28) mit einer optischen Abbildungsvorrichtung (30), insbesondere umfassend mindestens eine Linse (34), auf das Substrat (14) abgebildet wird.

4. Verfahren nach einem der voranstehenden Ansprüche, **dadurch gekennzeichnet, dass** das Substrat (14)
a) mit dem Strahlungsfeld (28) quer, insbesondere senkrecht, zu einer Oberfläche (56) des Substrats (14) beaufschlagt wird
und/oder
b) auf eine Substrattemperatur in einem Bereich von etwa 20°C bis etwa 80°C, insbesondere in einem Bereich von etwa 40°C bis etwa 50°C, erwärmt wird
und/oder
c) Quarzglas (SiO₂), insbesondere unbeschichtetes Quarzglas, oder Calciumfluorid (CaF₂) eingesetzt wird
und/oder
d) das Verfahren in einer Atmosphäre mit einem Sauerstoffanteil in einem Bereich von etwa 15% bis 100%, insbesondere etwa 20%, durchgeführt wird
und/oder
e) die Sauerstoff enthaltende Atmosphäre unter einem Druck in einem Bereich von etwa 1 mbar bis etwa 10 bar, insbesondere in einem Bereich von etwa 10 mbar bis etwa 1 bar, gehalten wird.

5. Verfahren nach einem der voranstehenden Ansprüche, **dadurch gekennzeichnet, dass**
a) das Substrat (14) kontinuierlich oder gepulst mit dem Strahlungsfeld (28) beaufschlagt wird,
wobei insbesondere das Substrat (14) gepulst mit
a1) einer Pulsdauer in einem Bereich von etwa 1 ns bis etwa 20 ns, insbesondere in einem Bereich von etwa 5 ns bis etwa 10 ns, mit dem Strahlungsfeld beaufschlagt wird
und/oder
a2) einer Repetitionsrate in einem Bereich von etwa 0,1 kHz bis etwa 1000 kHz, insbesondere etwa 1 kHz, mit dem Strahlungsfeld (28) beaufschlagt wird
und/oder
a3) dem Strahlungsfeld (28) mit einer Pulsenergiedichte in einem Bereich von etwa 0,1 J/cm² bis etwa 20 J/cm², insbesondere in einem Bereich von etwa 0,2 J/cm² bis etwa 10 J/cm², beaufschlagt wird,
und/oder
b) das Substrat (14) während einer Bestrahlungszeit in einem Bereich von etwa 1 Minute bis etwa 50 Stunden, insbesondere in einem Bereich von etwa 10 Minuten bis etwa 500 Minuten, mit dem Strahlungsfeld (28) beaufschlagt wird
und/oder
c) die monochromatische Strahlung (26) mit einem Laser (50) erzeugt wird, insbesondere mit einem Nd:YAG-Laser.

6. Verfahren nach einem der voranstehenden Ansprüche, **dadurch gekennzeichnet, dass** die monochromatische Strahlung (26) mit einer Wellenlänge in einem Bereich von etwa 100 nm bis etwa 400 nm, insbesondere mit etwa 355 nm, eingesetzt wird.

7. Verfahren nach einem der voranstehenden Ansprüche, **dadurch gekennzeichnet, dass**
a) das Substrat (14) mit dem Strahlungsfeld (28) durchstrahlt wird
und/oder
b) das Strahlungsfeld (28) nach dem Durchstrahlen des Substrats (14) absorbiert wird, insbesondere von einer Strahlfalle (36),
und/oder
c) das Substrat (14) in einer Substratkammer (16) angeordnet wird, in welcher die sauerstoffenthaltende Atmosphäre herrscht,
wobei der Percursor (20) in eine Precursorkammer (18) eingebracht wird, die mit der Substratkammer (16) fluidwirksam verbunden ist, wo
bei weiter insbesondere der Precursor (20) in der Precursorkammer (18) erwärmt wird,
und/oder
d) die dreidimensionale Struktur (12) in Form eines Glases oder glasartig ausgebildet wird
und/oder
e) das optische Bauelement (58) in Form einer optischen Linse (58) ausgebildet wird.

8. System (10) zum Herstellen einer dreidimensionalen Struktur (12) auf einem Substrat (14), insbesondere zur Ausbildung eines optischen Bauelements (58), welche dreidimensionale Struktur (12) aus Siliziumdioxid oder im Wesentlichen aus Siliziumdioxid ausgebildet wird, **dadurch gekennzeichnet, dass** das System (10) eine Substratkammer (16) mit einer mit einer Sauerstoff enthaltenden Atmosphäre und eine Strahlungsquelle (24) zum Erzeugen von ein Strahlungsfeld (28) definierender monochromatischer elektromagnetischer Strahlung (26) mit einer Wellenlänge im ultravioletten Spektralbereich umfasst, dass ein Silizium enthaltender Precursor (20) in die Substratkammer (16) eingebracht ist und mit dem Substrat (14) in Kontakt steht und dass die Strahlungsquelle (24) angeordnet ist zum Beaufschlagen des Substrats (14) mit dem Strahlungsfeld (28).

9. System nach Anspruch 8, **dadurch gekennzeichnet, dass**
a) das System (10) eine Verdampfungsvorrichtung (74) umfasst zum Überführen flüssigen Precursors (20) in die Gasphase
und/oder
b) der Precursor (20) Silikon-Öl oder Tetraethylorthosilicat ist oder enthält.

10. System nach Anspruch 8 oder 9, **dadurch gekennzeichnet, dass**
a) das System (10) eine Precursorerwärmungsvorrichtung (76) umfasst zum Erwärmen des Precursors (20) auf eine Temperatur in einem Bereich von etwa 20°C bis etwa 100°C
und/oder
b) der Precursor (20) eine Viskosität in einem Bereich von etwa 1 cSt bis etwa 200 cSt aufweist, insbesondere in einem Bereich von etwa 5 cSt bis etwa 100 cSt.

11. System nach einem der Ansprüche 8 bis 10, **dadurch gekennzeichnet, dass** das System (10)
a) eine Strahlprofilvorgabevorrichtung (70) zum Vorgeben des Strahlprofils (46) des Strahlungsfelds (28) umfasst
und/oder
b) eine optische Abbildungsvorrichtung (30), insbesondere umfassend mindestens eine Linse (34) und/oder mindestens einen Spiegel (32), zum Abbilden des Strahlungsfelds (28) auf das Substrat (14) umfasst.

12. System nach einem der Ansprüche 8 bis 11, **dadurch gekennzeichnet, dass**
a) das Strahlungsfeld (28) quer, insbesondere senkrecht, zu einer Oberfläche (56) des Substrats (14) ausgerichtet ist
und/oder
b) das System (10) eine Substraterwärmungsvorrichtung (72) umfasst zum Erwärmen des Substrats (14) auf eine Substrattemperatur in einem Bereich von etwa 20°C bis etwa 80°C, insbesondere in einem Bereich von etwa 40°C bis etwa 50°C,
und/oder
c) das Substrat (14) Quarzglas (SiO₂), insbesondere unbeschichtetes Quarzglas, oder Calciumfluorid (CaF₂) ist,
und/oder
d) die Sauerstoff enthaltende Atmosphäre einen Sauerstoffanteil in einem Bereich von etwa 15% bis 100%, insbesondere etwa 20%, aufweist
und/oder
e) ein in der Sauerstoff enthaltenden Atmosphäre herrschender Druck in einem Bereich von etwa 1 mbar bis etwa 10 bar, insbesondere in einem Bereich von etwa 10 mbar bis etwa 1 bar, liegt.

13. System nach einem der Ansprüche 8 bis 12, **dadurch gekennzeichnet, dass** die Strahlungsquelle (24) in Form einer kontinuierlichen oder gepulsten Strahlungsquelle (24) ausgebildet ist,
wobei insbesondere die gepulste Strahlungsquelle (24) ausgebildet ist zum
a) Erzeugen von Strahlungspulsen mit einer Pulsdauer in einem Bereich von etwa 1 ns bis etwa 20 ns, insbesondere in einem Bereich von etwa 5 ns bis etwa 10 ns,
und/oder
b) Erzeugen von Strahlungspulsen mit einer Repetitionsrate in einem Bereich von etwa 0,1 kHz bis etwa 1000 kHz, insbesondere etwa 1 kHz,
und/oder
c) Erzeugen von Strahlungspulsen mit einer Pulsenergiedichte in einem Bereich von etwa 0,1 J/cm² bis etwa 20 J/cm², insbesondere in einem Bereich von etwa 0,2 J/cm² bis etwa 10 J/cm².

14. System nach einem der Ansprüche 8 bis 13, **dadurch gekennzeichnet, dass**
a) das System (10) eine Zeitvorgabevorrichtung (86) zum Vorgeben einer Bestrahlungszeit in einem Bereich von etwa 1 Minute bis etwa 50 Stunden, insbesondere in einem Bereich von etwa 10 Minuten bis etwa 500 Minuten, umfasst
und/oder
b) die Strahlungsquelle (24) in Form eines Lasers (50) ausgebildet ist, insbesondere in Form eines Nd:YAG-Laser,
und/oder
c) die monochromatische Strahlung (26) eine Wellenlänge in einem Bereich von etwa 100 nm bis etwa 400 nm, insbesondere etwa 355 nm, aufweist
und/oder
d) das Substrat (14) aus einem für das Strahlungsfeld (28) durchlässigen Material ausgebildet ist,
wobei insbesondere das System eine Strahlfalle (36) zum Absorbieren des Strahlungsfelds (28) umfasst und dass das Substrat (14) in einem Strahlengang des Systems (10) zwischen der Strahlungsquelle (24) und der Strahlfalle (36) angeordnet ist,
und/oder
e) das System (10) eine Precursorkammer (18) zum Aufnehmen des Precursors (20) umfasst und dass die Precursorkammer (18) und die Substratkammer (16) fluidwirksam miteinander verbunden sind
und/oder
f) das System (10) eine Steuer- und/oder Regelungsvorrichtung (82) umfasst, welche insbesondere steuerungs- und/oder regelungswirksam mit der Strahlungsquelle (24) und/oder der Verdampfungsvorrichtung (74) und/oder der Strahlprofilvorgabevorrichtung (70) und/oder der Substraterwärmungsvorrichtung (72) und/oder der Zeitvorgabevorrichtung (86) und/oder der Precursorerwärmungsvorrichtung (76) verbunden ist.

15. Verwendung eines Systems (10) nach einem der Ansprüche 8 bis 14 zur Durchführung eines Verfahrens nach einem der Ansprüche 1 bis 7, insbesondere zur Ausbildung von Linsen, Phasenplatten zur ortsabhängigen Phasenkorrektur von Laserstrahlungsfeldern, Mikrolinsenarrays (60), asphärischer Optiken und diffraktiver optischer Elemente.
